# EUROPEAN PATENT SPECIFICATION

(11) **EP 4 533 073 B1**
(45) Date of publication and mention of the grant of the patent: **02.12.2026**
(21) Application number: 23730589.1
(22) Date of filing: 22.05.2023
(51) Int. Cl.: G01N 22/04

(54) **ELECTROMAGNETIC DETECTOR FOR DETECTING PROPERTIES OF PRODUCTS OF THE TOBACCO INDUSTRY**
ELEKTROMAGNETISCHER DETEKTOR ZUR ERFASSUNG VON EIGENSCHAFTEN VON PRODUKTEN DER TABAKINDUSTRIE
DÉTECTEUR ÉLECTROMAGNÉTIQUE PERMETTANT LA DÉTECTION DE PROPRIÉTÉS DE PRODUITS DE L'INDUSTRIE DU TABAC

(30) Priority: 25.05.2022 IT 202200010922
(43) Date of publication of application: 09.04.2025
(73) Proprietor: G.D S.p.A., 40133 Bologna (IT)
(72) Inventor: TRIVISONNO, Eura, 40133 BOLOGNA (IT); DIONIGI, Marco, 40133 BOLOGNA (IT); FRASSON, Marco, 40133 BOLOGNA (IT); VALDIROSA, Jacopo, 40133 BOLOGNA (IT)
(74) Representative: Persi, Patrizia
(86) International application number: PCT/IB2023/055227
(87) International publication number: WO 2023/228039

(56) References cited:
- EP-A1- 2 965 640
- WO-A1-2020/058868
- US-A- 4 297 874
- US-B1- 6 417 676

## Description

This invention relates to an electromagnetic detector for detecting one or more properties of a product, for example an additional element contained in a rod-shaped article such as a cigarette, or a filter, of the tobacco industry, or for example a semi-finished product of the tobacco industry, intended to be wrapped.

In particular, this invention is intended for making an electromagnetic detector, which is the seat of an electromagnetic field, which comprises a detecting channel which is open on three sides to allow the product to pass through the electromagnetic detector itself along a conveying line.

The rod-shaped article, containing the additional element whose properties must be detected, may be made of fibrous material, in this text the term fibrous material meaning a material containing fibres which may be selected in the group consisting of: tobacco and cellulose acetate. Indeed, the article may be, for example, a piece of filter, or a continuous filter, in a machine for making cigarette filters, or a piece containing tobacco, or a rod of tobacco for making cigarettes, in which the additional element may be included.

Alternatively, the product may be a semi-finished product of the tobacco field intended to be wrapped, containing tobacco particles, which may be retained by a suction belt. In this case, the detecting channel may be configured to slidably receive, along the conveying line, at least one portion of the suction belt and at least one portion of the semi-finished product retained on the suction belt.

For some time now there has been a widespread presence on the market of cigarettes containing flavouring substances which the consumer can decide whether or not to activate at the moment of use. Those flavouring substances, for example menthol, may be in liquid form, and are contained in one or more mechanically breakable capsules positioned in the filters in such a way that the consumer can decide, immediately before smoking each cigarette, whether or not to crush the capsule contained in the filter and disperse the contents in the filter itself to flavour it at the moment of use. The additional element may therefore be a capsule intended to be crushed at the moment of use.

It should be added that, at present, it is possible to make very complex cigarettes comprising series of portions of different types and composition. For this reason, generically, the term "cigarette" refers to an article for the tobacco industry comprising an active portion intended to release a substance to be inhaled. The additional element whose one or more properties must be detected could be, in this case, a composite portion, which has a different composition to that of the tobacco, or the filter, in which it may be included.

While the rod-shaped articles are being made and packaged, it is therefore important to carry out checks on quality in order to verify that the products contained in them, whether they are capsules or composite portions, comply with quality requirements and meet predetermined acceptability criteria in order to guarantee that the articles for smoking offered to the consumer are always of a predetermined quality.

Each product, whether it is a capsule, or a composite portion, must be contained in the respective article in a reference position which must remain within a longitudinal acceptability range, that is to say, considered along a longitudinal axis of the rod-shaped article, which is established beforehand in order for the product to be considered present and of acceptable quality. For example, if the capsule is in a position which is outside the acceptability range, or if it is present in a quantity which is less than the predetermined quantity, for example because it broke while the cigarette, or the filter, was being made, and has already completely dispersed in the article, the article must be rejected since it does not meet the necessary quality requirements. In this text the term "property of the product" therefore means, if the product is an additional element contained in an article for smoking, a feature selected in the group consisting of: presence, or absence, of the product in the article for smoking, correct quantity/correct filling, and if necessary breaking during production of the article for smoking itself, longitudinal positioning in the article for smoking, weight, dimensions, and if necessary material used to make the product.

If, in contrast, the product is a semi-finished product of the tobacco field, intended to make a rod of tobacco, the term "property of the product" may be understood to mean, a feature such as for example density and/or moisture, in such a way as to be able to assess a correct quantity of tobacco inside the semi-finished product and to ensure that the rod, and therefore ultimately the finished article, obtained from that rod, is made correctly.

An example of a system for checking articles for smoking containing capsules is given in document EP2848133B1, which discloses an assembly for checking capsules with liquid contents in articles such as cigarette filters, in which the check is carried out when the articles are conveyed through a microwave detecting device which has at least one lateral inlet. Projecting sections of the articles, which are housed in respective cavities of a conveyor, project from said cavities and pass through the microwave detecting field for checking the liquid content of the capsules contained in the projecting sections.

The microwave detecting device is a waveguide resonator which has a coupling to a transmitting antenna by means of a transmitting iris and a further coupling to a receiving antenna by means of a further receiving iris. In this way, present in the microwave resonator there is a microwave measuring field fed through the transmitting iris, which has a maximum in a central part of the resonator and comes out through the receiving iris.

The presence of the two irises determines the measuring sensitivity of the resonator. Indeed, the distance between the two irises determines the resonance frequency of the resonator which, in turn, determines the quality factor of the microwave resonator which expresses the measuring sensitivity of the resonator and, therefore, the resonator capability for precisely determining the features of the capsules in the articles.

Even if the presence of the two irises allows the microwave resonator to be operated at a low resonance frequency, thereby avoiding dispersing the electromagnetic field outside the detecting channel, the two irises introduce a complexity to the making of the microwave resonator itself which in that case is made up of three separate parts (the transmitting iris, the receiving iris and the body of the resonator) which are difficult to precisely assemble. Indeed, the three parts require particular care when coupling the transmitting iris to the transmitting antenna and the receiving iris to the receiving antenna, in order to be able to guarantee a correct measurement. On the other hand, in the absence of the irises and where the aim is to work at low resonance frequencies, the electromagnetic detectors may be relatively bulky as they extend substantially perpendicularly both to the product conveying line and to the depth of the detecting channel and this makes it necessary to reserve a considerable space for the electromagnetic detector in the machine for making articles for smoking, and therefore makes it impossible to freely choose a preferred installation position for the detector.

Document EP2965640 relates to a rotary conveyor drum for rod-shaped articles, with one or more measuring devices associated with the drum, wherein each measuring device is provided with a passage channel open on one side to allow the passage of sections of the rod-shaped articles.

Document WO2020058868 shows an electromagnetic detector comprising an emitting probe for creating an electromagnetic field and a receiving probe for receiving an electromagnetic field altered by the presence of the product, wherein the probes are positioned inside the electromagnetic detector and have an angled shape, that is to say, they have at least one angle.

The aim of this invention is to make an electromagnetic detector for detecting one or more properties of a product, for example of a capsule in a rod-shaped article or of a semi-finished product intended to be wrapped which is free of the problems described above and which at the same time is easy and inexpensive to make.

Another aim of this invention is to make an electromagnetic detector which has reduced dimensions in such a way that it can easily be installed in any position in a machine for making rod-shaped articles of the tobacco industry. A further aim of this invention is to make an electromagnetic detector having a detecting channel which is the seat of an electromagnetic field and is open on three sides to allow a product to be conveyed through the electromagnetic detector along a conveying line, which is capable of checking with a high level of measuring sensitivity the features of the product, whether the product is a capsule included in a filter, or in a cigarette, or whether it is the semi-finished product intended to be wrapped. These aims and others are all achieved by an electromagnetic detector according to this invention as set out in the independent claims below or in any of the claims directly or indirectly dependent on the independent claims mentioned.

Further features and advantages of this invention will be more apparent from the approximate, and therefore non-limiting description of a preferred, non-limiting embodiment of an electromagnetic detector, as illustrated in the accompanying drawings in which:
- Figure 1 is a front perspective view of the electromagnetic detector according to this invention which comprises a detecting channel, which is the seat of an electromagnetic field;
- Figure 2 is a rear perspective view of the electromagnetic detector of Figure 1, in which it can be seen how the electromagnetic detector comprises a source of emission and a source of reception, a heating device, and two temperature sensors, which are all fixed to a rear wall of a hollow body made of a conductive material;
- Figure 3 is a front view of the electromagnetic detector of Figure 1, in which the cross-section planes IV-IV, of Figure 4, V-V of Figure 5 and VI-VI of Figure 6 are indicated;
- Figure 4 is a front perspective view of the electromagnetic detector of Figure 1 sectioned with the cross-section plane IV-IV of Figure 3, showing the source of emission (or of reception) positioned in an emission cavity (or reception cavity) delimited in the hollow body by an inner part of a first component of a dielectric structure, made of a non-conductive material, which is configured to at least partly cover the detecting channel;
- Figure 5 is a front perspective view of the electromagnetic detector of Figure 1 sectioned with the cross-section plane V-V of Figure 3, showing the inner part of the first component and a second component of the dielectric structure, which is housed in the inner part of the first component;
- Figure 6 is a front perspective view of the electromagnetic detector of Figure 1 sectioned with the cross-section plane VI-VI of Figure 3, showing the source of reception (or of emission) positioned in a reception cavity (or emission cavity) delimited in the hollow body by the inner part of the first component;
- Figure 7 is a perspective view of the first component of the dielectric structure, comprising an outer part, which is configured to at least partly cover the detecting channel and the inner part, which is configured to be contained in the hollow body;
- Figure 8 is an exploded view of the electromagnetic detector of Figure 1;
- Figure 9 is another exploded view of the electromagnetic detector of Figure 1;
- Figure 10 is a cross-section view of the detector of Figure 1 at the cross-section plane IV-IV of Figure 4, showing electromagnetic field oriented parallel to a longitudinal axis of a rod-shaped article, that is to say, of a cigarette, positioned in the detecting channel, in which a capsule is present in a filter of the cigarette, the electromagnetic detector being capable of measuring the characteristic properties of the capsule.

Hereinafter the same elements will be referred to using the same numbers for the various figures.

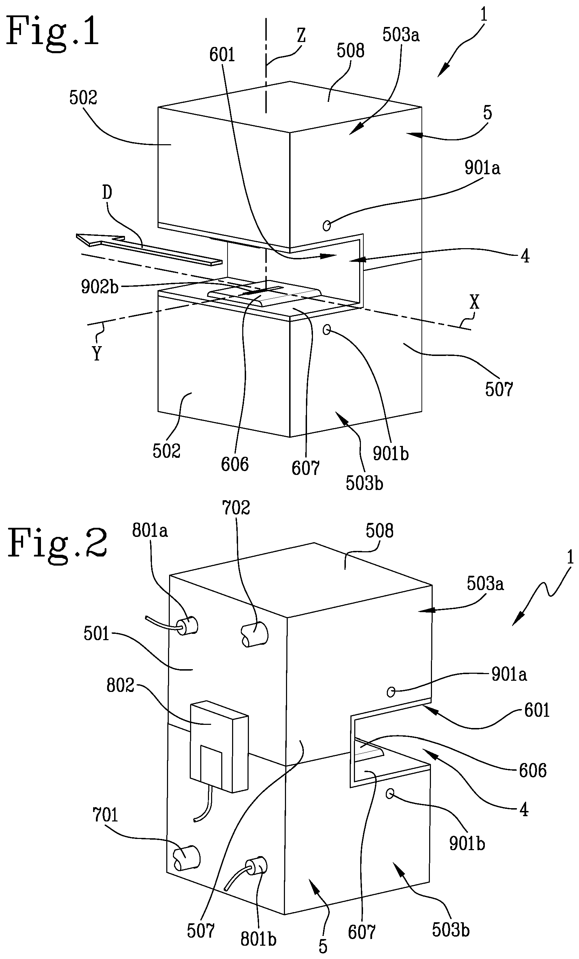

Figures 1 to 10 show an electromagnetic detector 1, hereinafter indicated more simply as a detector, for detecting one or more properties of a product 2 of the tobacco industry.

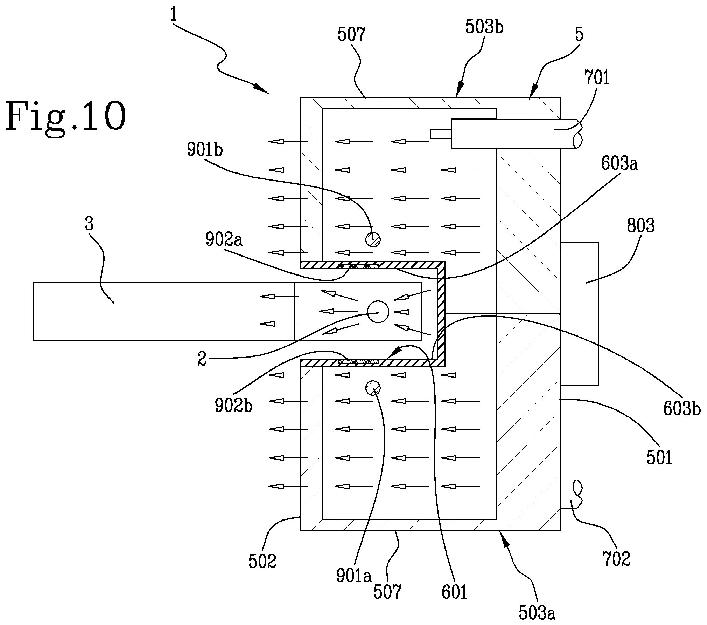

The product 2 may be a capsule included in an article 3, for example a cigarette as shown in Figure 10. In general, the product 2 may be an additional element contained in a rod-shaped article 3 such as a cigarette, or a filter, of the tobacco industry, or it may be a semi-finished product of the tobacco industry.

What the term "product" means has been described in detail previously and for brevity will not be repeated now.

In this text the term "property of the product" therefore means, if the product 2 is an additional element included in an article for smoking 3, a feature selected in the group consisting of: presence, or absence, of the product in the article 3, correct quantity/correct filling, and if necessary breaking during production of the article 3 itself, longitudinal positioning in the article 3, weight, dimensions, and if necessary material used to make the product 2. If the product 2 is a semi-finished product intended to be wrapped, the electromagnetic detector 1 can detect the following "properties of the product": weight or density of the semi-finished product, for example before it is wrapped with metallized paper (or paper containing metallic particles).

As has already been described in detail, the detector 1 according to this invention may advantageously be used in various machines of the tobacco industry, and even in other automatic machines of other industrial fields, where one or more properties of a product 2 must be detected.

The detector 1 comprises a detecting channel 4 which is the seat of an electromagnetic field, which is open on three sides to allow the product 2 to pass through the detector 1 along a conveying line D.

The electromagnetic field is altered by the presence of the product 2 in the detecting channel 4 and that allows detection of one or more properties of the product 2 during said passage of the product 2.

Indeed, the alteration in the electromagnetic field can be measured and from this measurement, by means of subsequent processing, it is possible to determine the properties of the product 2.

The detector 1 comprises a hollow body 5, which is made of a conductive material and has an interruption configured to define the detecting channel 4. Therefore, a cavity is delimited inside the body.

The detector 1 comprises a dielectric structure, which is housed in the body 5 and is made of a non-conductive material, which is configured to at least partly cover the detecting channel 4.

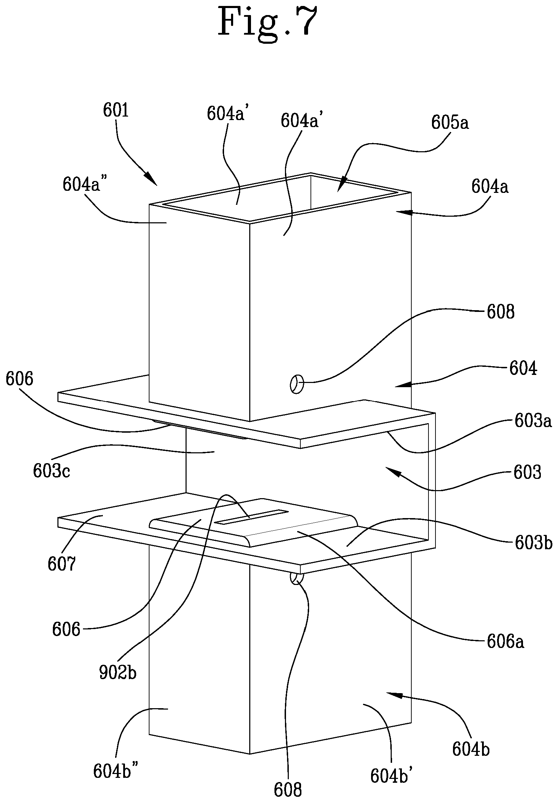

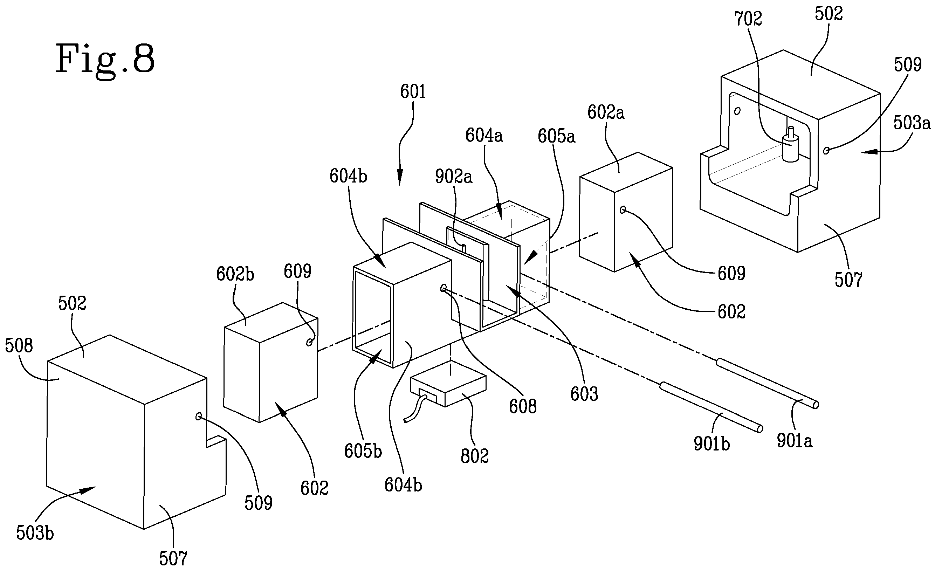

The dielectric structure comprises at least one first component 601, for example shown in Figure 7, having a first dielectric permittivity and at least one second component 602, for example shown in Figure 8, having a second dielectric permittivity.

It should be noticed that the first dielectric permittivity of the first component and the second dielectric permittivity of the second component are different from each other.

Thanks to the fact that the first dielectric permittivity and the second dielectric permittivity are different, they can be selected in an appropriate way and it is possible to obtain a detector 1 which, having the electromagnetic field at a predetermined resonance frequency, has compact dimensions.

Indeed, advantageously, it is possible to use a resonance frequency greater than or equal to 100 MHz and less than or equal to 3 GHz; preferably greater than or equal to 100MHZ and less than or equal to 2 GHZ; even more preferably greater than or equal to 1 GHZ and less than or equal to 1.9GHZ, preferably equal to 1.8GHZ. At this resonance frequency of the electromagnetic field, it is possible to concentrate the electromagnetic field itself inside the detecting channel 4, increasing the merit factor of the electromagnetic detector 1 and the sensitivity of the measurement.

The first component 601 comprises an outer part 603, which is configured to at least partly cover the detecting channel 4 and has two lateral panels 603a; 603b which are opposite each other and a back panel 603c which delimits a back of the detecting channel 4. The back panel 603c is positioned between the two lateral panels 603a, 603b. The detecting channel is open at the opposite side to the back panel 603c.

As shown in the appended Figures 1 to 10, the lateral panels 603a, 603b may be parallel to each other and, in contrast, are perpendicular to the back panel 603c.

The first component 601 comprises an inner part 604, which is contained inside the body 5.

It should be noticed that the second component 602 is entirely contained inside the body 5.

Thanks to the fact that the second component 602 is entirely contained inside the body 5 and does not have parts exposed in the detecting channel 4, it is possible to make the second component 602 using any dielectric material, even a dielectric material which is not permitted for use with food, which therefore could not be used to cover, even partly, the detecting channel 4.

The first dielectric permittivity of the first component 601, made of a first dielectric material, is less than, preferably much less than, the second dielectric permittivity of the second component 602, made of a second dielectric material.

This simplifies the selection of the second dielectric material, in the sense that it is possible to use materials with very high dielectric permittivity, capable of concentrating the electric field in the detecting channel 4 and of guaranteeing compact dimensions for the electromagnetic detector 1 itself, without the constraint of having to select one of the dielectric materials permitted for use with food.

Indeed, the first dielectric material of the first component 601 must be an inert material, accepted amongst those intended for contact with food, and may be a material of the plastic type, which may be selected in the group consisting of: high density polyethylene (abbreviated as HDPE); polystyrene (abbreviated as PS); Polytetrafluoroethylene (a polymer belonging to the class of perfluorocarbons, abbreviated as PFC known through its trade name Teflon^{™}); and if necessary any combination of them.

Indeed, it is known that the plastic materials indicated above do not negatively impact consumer health and do not affect the quality of the articles for smoking with which they may come into contact.

In contrast, the second dielectric material of the second component 602 may be selected in the group consisting of: ceramic material (for example aluminium oxide Al2O3, or alumina, barium titanate BaTO3); crystalline material (for example aluminium oxide Al2O3 in the mineral form as corundum, or sapphire); and if necessary any combination of them.

The second dielectric material may therefore have a very high dielectric permittivity, thereby promoting concentration of the electromagnetic field.

Consequently the detector 1 may be made inexpensively to the sensitivity specifications required for detecting properties of the product 2.

Advantageously, the second component 602 may be contained in the inner part 604 of the first component 601.

In this case, the first component 601 also acts as a protective case for the second component 602 and can hold the second component 602 in position, absorbing any vibrations to which the detector 1 may be subjected, during operation of the machine for articles for smoking in which it is installed.

Indeed, some of the dielectric materials selectable for the second component 602 may be fragile but, thanks to the containment offered by the second component 602, the dielectric structure comprising the first component 601 and the second component 602 is in any case very sturdy. The inner part 604 of the first component 601 comprises two separating elements 604a and 604b which extend transversally, in particular perpendicularly, starting respectively from the lateral panels 603a and 603b and are positioned on opposite sides of the detecting channel 4.

It shall be understood that the two separating elements 604a and 604b are configured and positioned to divide the cavity of the body 5. In particular, the two separating elements 604a and 604b are configured and positioned to divide the cavity delimited by the body 5 into an emission cavity 505 and into a reception cavity 506.

It should be noticed that each separating element 604a, 604b comprises a respective seat 605a and 605b, configured to house a respective block 602a and 602b of the second component 602.

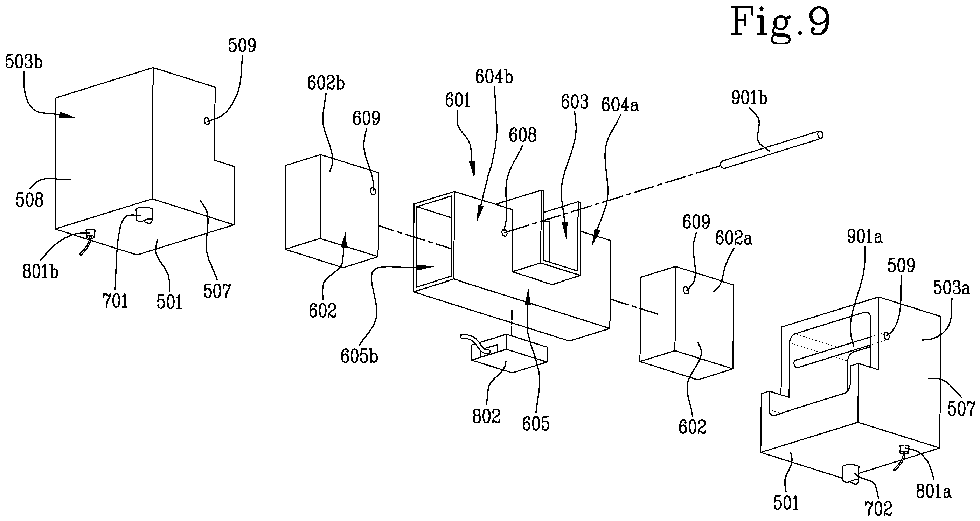

Indeed, the second component 602 comprises at least two blocks 602a and 602b and each block 602a, or 602b, may be separate and distinct from the other block 602b, or 602a, as also shown in Figures 8 and 9.

Alternatively, according to one variant not illustrated, each block 602a, or 602b, may be joined to the other block 602b, or 602a by means of a connecting portion, not illustrated, configured to connect the two blocks 602a and 602b to each other which may also be housed in the first component 601, for example in a seat made, at least partly, in the back panel 603c.

It should be noticed that despite the blocks 602a and 602b being shown as prismatic blocks, in particular having the shape of a parallelepiped, they may also be made with a different shape, for example cylindrical.

In the case illustrated, each seat 605a, or 605b, of the respective separating element 604a, 604b, is delimited by respective outer walls 604a', or 604b', which are opposite each other, and by at least one intermediate wall 604a", 604b", positioned between the outer walls 604a', 604b'. A rear wall, opposite the intermediate wall 604a", 604b", may be placed to delimit each seat 605a and 605b on three sides to effectively contain each block 602a, 602b. According to one variant not shown, the rear walls of the separating elements 604a, 604b are absent and each seat 605a and 605b is open on two sides.

According to one variant, not shown, the dielectric structure may comprise a plurality of components, having respective dielectric permittivities which are different from each other and made of different respective dielectric materials to make a composite dielectric structure.

That composite dielectric structure is capable of increasing the merit factor, and the measuring sensitivity, of the detector 1 itself.

In the case of a plurality of components, the first component 601 which comprises the outer part 603 configured to at least partly cover the detecting channel 4 may be present, but both the second component 602 and other components, entirely contained in the body 5 may be present.

In other words, the dielectric structure may comprise: the first component 601, which is made of the first dielectric material, which comprises the outer part 603 at least partly covering the detecting channel 4 and the inner part 604, contained in the body 5; the second component 602 and a plurality of further components which are different from each other, made of respective dielectric materials, wherein the second component 602 and the plurality of further components are entirely contained in the body 5, in particular are entirely contained in the inner part 604 of the first component 601.

In addition, or alternatively, the dielectric structure may comprise the first component 601 and a plurality of other components which are different from each other, made of respective dielectric materials which are different from each other, wherein that first component 601 and those other components may be present partly covering the detecting channel 4.

In the latter case, the first component 601 and those other components must be made of respective inert dielectric materials, which are permitted for use with food. For example, each lateral panel 603a, 603b may be made using two different plastic dielectric materials combined with each other.

It remains the case that the dielectric structure may comprise the inner part 604 made only in the first component 601 and that the second component 602 and a plurality of further components which are different from each other, made of respective dielectric materials, may be entirely contained in the body 5, and in particular contained in the inner part 604.

In one embodiment, both of the lateral panels 603a; 603b may have respective central zones 606 which are opposite each other, which project further into the detecting channel 4 than the remaining zones 607, which surround each central zone 606, in such a way that a passage section of the detecting channel 4 between the central zones 606 is smaller than the passage section between the remaining zones 607.

The lateral panels 603a, 603b are substantially planar, in the sense that both the central zones 606 and the remaining zones 607 are planar, but each central zone 606 projects relative to the remaining zone 607. The central zones 606 of both of the lateral panels 603a, 603b are parallel to each other, and the remaining zones 607 of the lateral panels 603a, 603b are also parallel to each other.

However, it is not necessary for both of the lateral panels 603a, 603b to have the central zone 606, projecting relative to the remaining zone 607, since it is sufficient for the central zone 606 to be present in only one of the two lateral panels 603a, or 603b.

One of the two lateral panels 603a, or 603b, may have a central zone 606, which projects further into the detecting channel 4 than a remaining zone 607, which surrounds the central zone 606. The other lateral panel 603b, or 603a may be entirely planar.

In this case too, a passage section of the detecting channel 4 at the central zone 606 is smaller than the passage section of the detecting channel 4 at the remaining zone 607.

It should be noticed that at the central zone 606 the distance between the product 2 and the detector 1 is reduced during the passage of the product 2 in the detecting channel 4. This allows an increase in the measuring sensitivity, movement of the product 2 towards the detector 1 in the central zone 606 being promoted as far as possible.

It should be noticed that, along the conveying line D the central zone 606 has end edges 606a which are rounded, or inclined, in such a way as to promote the entry, or the exit of the product 2 along the conveying line D. That is optional and may be advantageous for products 2 such as capsules contained in elongate articles for smoking 3, such as cigarettes, or filters, a stretch of which can pass through the detecting channel 4 along the conveying line D, as described in more detail below.

According to a different embodiment, the electromagnetic detector 1 may comprise at least one field concentrator 902a, or 902b, which is associated with one of the two lateral panels 603a, or 603b and has at least one final end positioned along a path for conveying the product 2 in the detecting channel 4 along the conveying line D.

The field concentrator 902a, 902b is configured to concentrate the electromagnetic field at said final end in such a way as to promote a further increase in the measuring sensitivity, and therefore a precision in the measurement itself, when the product 2 is conveyed in the detecting channel 4.

It should be noticed that, preferably, the electromagnetic detector 1 comprising two field concentrators 902a and 902b, respectively associated with the lateral panels 603a and 603b. For example, the final end of each field concentrator 902a and 902b in the respective lateral panels 603a and 603b may be positioned along the conveying path of the capsule 2 in the cigarette 3, that is to say, along the trajectory described by the capsule 3 inside the detecting channel 4, in such a way as to concentrate the electromagnetic field at the capsule 2, during the passage of the capsule 2 in the detecting channel 4 and the detecting of the properties of the capsule 2 itself.

Each field concentrator 902a, 902b is made of a conductive material, is housed in the respective lateral panel 603a, 603b and has an elongate shape, for example is shaped like a strip. Each field concentrator 902a, 902b is positioned transversally, in particular perpendicularly to the conveying line D. Each field concentrator 902a, 902b is therefore associated with the respective lateral panel 603a, 603b since it is housed inside it. Optionally, each field concentrator 902a, 902b may be fixed to the respective lateral panel 603a, 603b.

Specifically, each field concentrator 902a, 902b may be housed in the central zone 606 of the lateral panel 603a, 603b, for example at a centre line of that same central zone 606, along the conveying line D.

Having an elongate shape, each field concentrator 902, 903 comprises two final ends, at which the electromagnetic field is concentrated, one of which is near the back panel 603c whilst the other is positioned towards the opening of the detecting channel 4.

Therefore, advantageously, there may be two separate zones in the lateral panel 603a, 603b, in which the electromagnetic field can be concentrated. This facilitates measuring if two separate capsules 2 are present in a cigarette 3, when the properties of those capsules 2 must be measured. Indeed, each field concentrator 902a, 902b may have a length equal to a longitudinal distance between the two capsules 2 in the cigarette 3 to concentrate the electromagnetic field along the respective conveying paths of each capsule 2 in the cigarette 3.

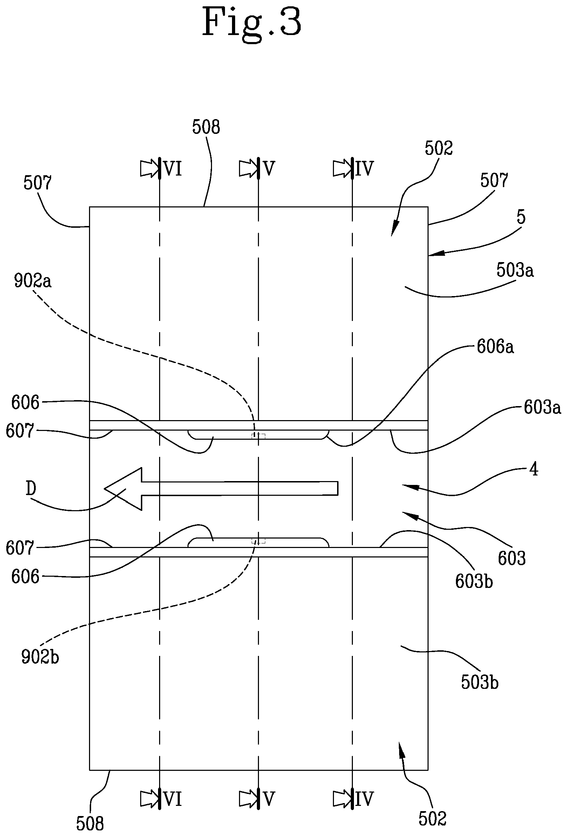

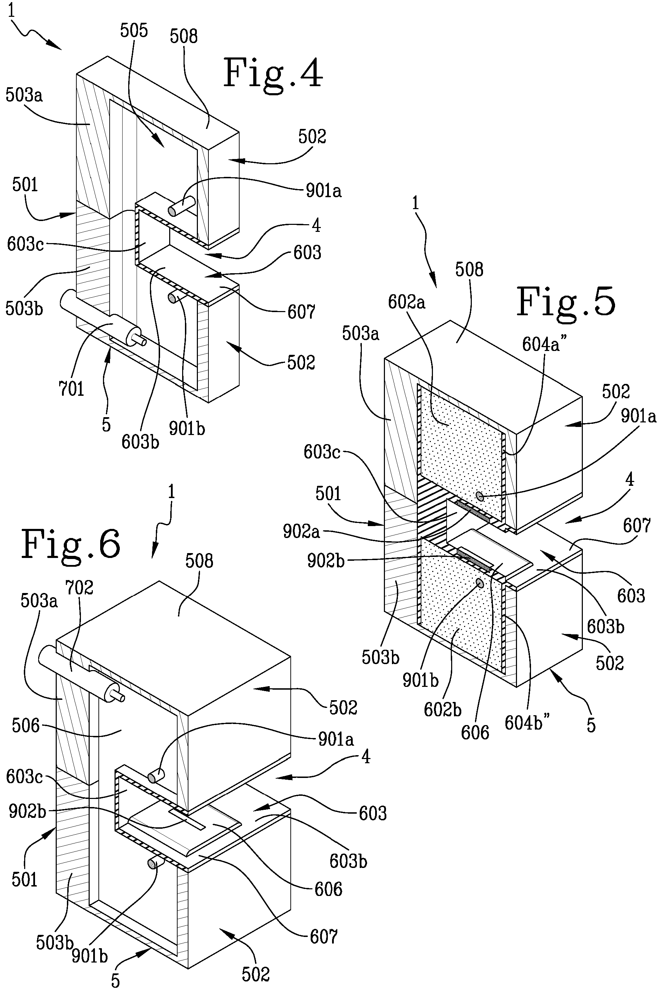

It should be noticed that each lateral panel 603a, 603b, and in detail each central zone 606, has a respective seat which is not a through seat (for example as shown in Figures 3 and 5) to house the respective field concentrator 902a, 902b in such a way that an outer surface of the latter is flush with the central zone 606.

However, according to one variant not illustrated, each field concentrator 902a, 902b may even extend for an entire thickness of the lateral panel 603a, 603b, that is to say, each zone 606 may have a through seat in such a way that each field concentrator housed in it may have the outer surface flush with the central zone 606 and a further outer surface, opposite the outer surface, in contact with the second component 602.

In particular, the further outer surface of each field concentrator 902a, 902b can be positioned in contact with the respective block 602a and 602b, inserted into the respective seat 605a, 605b.

The first component 601, shown in Figure 7, has a complex three-dimensional shape and may be made by injection moulding the first dielectric material, which is a plastic material. However, if the first dielectric material allows it, advantageously, the first component 601 may even be made by 3D printing. Given the simplicity of making the first component 601 and the second component 602, made using the two blocks 602a and 602b, the dielectric structure can be made inexpensively.

The body 5 has a rear wall 501 and a front wall 502, which is interrupted by the detecting channel 4, which are opposite and parallel to each other.

If we consider the detecting channel 4, it extends along a longitudinal axis X, parallel to the conveying line D.

The detector 1 has a first transversal axis Y, in particular perpendicular, to the longitudinal axis X which is also perpendicular to the rear wall 501, and a second transversal axis Z, in particular perpendicular, both to the longitudinal axis X and to the first transversal axis Y.

The body 5 comprises two housings 503a and 503b which extend from the rear wall 501 along respective axes which are parallel to the first transversal axis Y.

The inner part 604 of the first component 601, which is positioned inside the body 5, is configured to divide the cavity delimited by the body 5 into the emission cavity 505, comprising a source of emission 701 for creating the electromagnetic field, and into the reception cavity 506, comprising a source of reception 702 for receiving an electromagnetic field altered by the presence of the product 2 in the detecting channel 4.

It should be noticed that the two separating elements 604a and 604b are positioned on opposite sides of the detecting channel 4, each separating element 604a and 604b being contained in a respective housing 503a and 503b.

In more detail, the two separating elements 604a and 604b are aligned with each other along an axis parallel to the second transversal axis Z. This makes the first component symmetrical relative to a plane of symmetry perpendicular to the longitudinal axis X but that is not necessary, since the two separating elements 604a and 604b could be offset relative to the plane of symmetry.

Along a line parallel to the first transversal axis Y, each separating element 604a and 604b extends from the rear wall 501 to the front wall 502 to divide the cavity into the emission cavity 505 and into the reception cavity 506.

This means that the outer walls 604a', or 604b', of each separating element 604a, or 604b, extend from the rear wall 501 to the front wall 502 and that each intermediate wall 604a", 604b" is positioned in contact with the front wall 502, as shown in Figure 5, or rather with the part of the front wall 502 which is part of the respective housing 503a, or 503b. In this way, each block 602a, or 602b, is protected from contact with the front wall 502 by interposing the intermediate wall 604a" and 604b", that is to say, as previously indicated, it increases the sturdiness of the dielectric structure since any vibrations to which the body 5 may be subjected are filtered, or in any case attenuated.

The lateral panels 603a, 603b extend in respective planes which are parallel to each other, and are also parallel to a plane X-Y defined by the longitudinal axis X and by the first transversal axis Y. It should be noticed that each field concentrator 902a, 902b has its longitudinal axis positioned parallel to the first transversal axis Y and is placed at the centre line of the respective lateral panel 603a, 603b.

The body 5 may have the shape of a parallelepiped and, as shown in Figures 1 to 10, may comprise two lateral walls 507 which are parallel to each other, opposite each other and "C"-shaped, and two end walls 508 which are opposite each other.

It should be noticed that, along a line parallel to the second transversal axis Z, each separating element 604a, 604b extends from the respective lateral panel 603a, 603b until it makes contact with the respective end wall 508. Therefore, both the outer walls 604a', 604b' and the intermediate wall 604a" and 604b" extend along an axis parallel to the second transversal axis Z until they make contact with an end wall 508.

Alternatively, according to a variant not shown, the body 5 may have the shape of a cylinder with an axis of symmetry parallel to the first transversal axis Y.

Although the rear wall 501 and the front wall 502 are present, the lateral walls 507 and the end walls 508 would be absent in this case, there being a curved wall present to externally delimit the detector 1. What was previously indicated regarding the shape of the dielectric structure still applies, however it will differ due to a different shape of the separating elements 604a, 604b, which will extend appropriately along the second transversal axis Z to make contact with the curved wall if it is present.

The source of emission 701 and the source of reception 702 are fixed to the rear wall 501 in a diametrically opposed position relative to a plane of symmetry which is transversal, in particular perpendicular to the longitudinal axis X of the detecting channel 4. That plane of symmetry is parallel to the first transversal axis Y and to the second transversal axis Z.

The position of the source of emission 701 and of the source of reception 702 is such that the electromagnetic field is parallel to the first transversal axis Y, as examined in more detail below.

It should be noticed that the detector 1 comprises at least one temperature sensor 801a, which is fixed to the rear wall 501 and is positioned in the body 5 to measure the temperature of a housing 503a, or 503b.

According to one variant, the detector 1 comprises a pair of temperature sensors 801a, 801b, which are fixed to the rear wall 501, each positioned in the body 5, in particular inside a respective housing 503a, or 503b, to measure the temperature of these housings. Indeed, in each housing 503a and 503b respective openings are made in which the temperature sensors 801a, 801b are housed.

The temperature sensor 801a, or the pair of temperature sensors 801a and 801b, perform a temperature measurement capable of correcting the detection of the properties of the product 2 performed, if the electromagnetic field detected is affected by the internal temperature and, therefore, the measurement obtained from the electromagnetic field would also be affected.

The temperature sensor 801a or, if they are present, the two temperature sensors 801a and 801b, is positioned, or are positioned, in a position diametrically opposed to the source of emission 701, or to the source of reception 702.

Advantageously, the detector 1 may comprise a heating device 802 fixed to the rear wall 501 to heat the body 5 to a preset operating temperature T.

The preset operating temperature T may be, for example, a few degrees higher than the maximum temperature which the detector 1 can reach when it is, in use, installed in a machine of the tobacco field. This maximum temperature reachable may depend on the outside temperature of the factory, in which the machine of the tobacco field is installed, or may be selected in an appropriate way after a step of training and of detecting the average operating temperature.

Thanks to the heating device 802 a stability in the measurements performed by the detector 1 is guaranteed and therefore correction of the detection of the properties of the product 2 performed is avoided as far as possible, if the electromagnetic field detected is affected by the internal temperature of the detector 1 itself.

It should be noticed that one of the two temperature sensors 801a, or 801b, may be used to detect the temperature of the detector 1 for the purposes of a feedback check of the heating device 802, whilst the other temperature sensor 801b, or 801a, may be used, in the presence of the two temperature sensors 801a and 801b, for the correction depending on the temperature measured of the detection of the properties of the product 2 performed. In the presence of only the temperature sensor 801a, the latter may be used for the correction of the detection of the properties of the product 2 performed whilst the feedback check of the heating device 802 may be delegated to a temperature sensor optionally integrated in the heating device 802 itself.

The detector 1 additionally comprises at least one mode selector, which is made of a conductive material and is fixed to the body 5 to eliminate unwanted modes of resonance of the electromagnetic field.

It can be seen how the mode selector is shaped like a bar and is positioned parallel to the conveying line D of the detecting channel 4.

As shown in Figures 8 and 9, the detector 1 may comprise a pair of mode selectors 901a, 901b, since each housing 503a and 503b comprises a respective mode selector 901a, 901b which is configured to pass through the emission cavity 505, the inner part 604 of the first component 601, and the reception cavity 506. Each mode selector 901a, 901b also passes through the respective second component 602, the latter being entirely contained in the inner part 604 of the first component 601.

In detail, each mode selector 901a, or 901b, is configured to pass through a respective separating element 604a, or 604b, in whose seat 605a, or 605b the respective block 602a, or 602b is housed. In Figure 8 each mode selector 901a, or 901b, is shown exploded at the position of insertion into the respective separating element 604a, 604b.

For that purpose, it should be noticed that the ends of each mode selector 901a, or 901b, are fixed to the lateral walls 507 of the detector 1, at their portions which are part of the housing 503a, or of the other housing 503b. The fixing to the lateral walls 507 is shown by way of example in Figure 9 with reference to the housing 503a, with which the mode selector 901a is shown to be associated. In contrast, the mode selector 901b is shown in the position of insertion into the separating element 604b, as in Figure 8.

The fixing of each mode selector 901a, or 901b, to the respective housing 503a, 503b may occur, in a way not shown, with coupling by means of a threaded portion or by means of retaining in a seat with a washer closing respective holes 509, which are present in the housing 503a, 503b itself for the insertion of each mode selector 901a, 901b.

It should be noticed that each separating element 604a, or 604b, is also provided with respective holes 608, to allow insertion of the respective mode selector 901a, or 901b. Similarly, holes 609 are made in each block 602a, or 602b, in such a way that the mode selector 901a, or 901b can pass through them.

As already indicated, preferably, the detector 1 is a microwave resonator operating at a resonance frequency greater than or equal to 100 MHz and less than or equal to 3 GHz, preferably greater than or equal to 100MHZ and less than or equal to 2GHZ, even more preferably greater than or equal to 1GHZ and less than or equal to 1.9GHZ, preferably equal to 1.8GHZ.

The microwave electromagnetic field has an electric field oriented parallel to a conveying plane in which the conveying line of the product 2 lies, which is defined by the longitudinal axis X and by the first transversal axis Y.

Indeed, as shown in Figure 10 in which a cylindrical article for smoking 3 such as a cigarette is shown, the product 2 such as the capsule contained in it can easily be inspected, since the electromagnetic field strikes the cigarette 3 itself longitudinally and renders the detection of one or more properties of the capsule 2 immune from the longitudinal positioning of the capsule 2 itself in the cigarette 3.

In other words, the electric field is oriented parallel to the longitudinal axis of the cigarette 3.

If the product 2 is the capsule included in the rod-shaped article for smoking 3, such as the cigarette, an apparatus may be proposed which comprises the detector 1 described above and a conveying device, not illustrated, provided with seats configured to retain the respective articles 3 to be inspected and to convey those articles 3 one after another perpendicularly to their longitudinal axis.

A stretch of each article 3, containing the product 2 to be checked, may in this case project relative to the conveying device in order to pass through the detecting channel 4 along the conveying line in such a way that during that passage the detector 1 can detect the features of the product 2. The electromagnetic field in the detecting channel 4 has an electric field oriented parallel to the longitudinal axis of the articles 3 conveyed, that is to say, parallel to the longitudinal axis of the cigarettes 3 conveyed by the conveying device.

In use, the source of emission 701 and the source of reception 702 create and respectively receive an electromagnetic field in the detecting channel 4.

Thanks to the dielectric structure which comprises the first component 601 and the second component 602, having respective dielectric permittivities which are different from each other, wherein the second component 602 has a dielectric permittivity which is greater than that of the first component 601, it is possible to generate an electromagnetic field at a low resonance frequency within the range from 100 MHz to 3 GHz, preferably from 100MHZ to 2GHZ, even more preferably from 1GHZ to 1.9GHZ, preferably equal to 1.8GHZ, concentrating the electromagnetic field inside the detecting channel 4, and therefore increasing the merit factor of the detector 1 and the sensitivity of the measurement of the features of the product 2.

Therefore, it is possible to obtain a detector 1 with compact dimensions at a predetermined resonance frequency, which can easily be installed without problems caused by bulkiness in the machines of the tobacco field.

Along the path for conveying the product 2 in the detecting channel 4, for example during conveying of the cigarette 3 in the conveying channel 4, it is possible to detect the properties of the capsule 2 present in the cigarette 3.

Thanks to the presence of a passage section of the detecting channel 4 which is smaller between the central zones 606, than the remaining zones 607, the measuring sensitivity is increased, movement of the product 2 towards the detector 1 being promoted as far as possible in the central zone 606.

Moreover, the presence of the field concentrator 902a, or 902b, allows the creation of concentrated field zones, positioned along the conveying path of each capsule 2 which increases the measuring sensitivity even more, allowing an increase in the merit factor of the detector 1.

Despite being composite, the dielectric structure which comprises the first component 601 and the second component 602 is sturdy and simple to make, thereby rendering the detector 1 itself inexpensive.

## Claims

1. An electromagnetic detector (1) for detecting one or more properties of a product (2), for example of a capsule in a rod-shaped article (3) of the tobacco field or of a semi-finished product of the tobacco field intended to be wrapped, which comprises a detecting channel (4) which is the seat of an electromagnetic field and is open on three sides to allow the product (2) to be conveyed through the detector (1) along a conveying line (D); wherein the electromagnetic detector (1) comprises: a hollow body (5), which is made of conductive material and has an interruption configured to define the detecting channel (4), and a dielectric structure (601, 602), housed in the body (5) and made of non-conductive material, which is configured to at least partly cover the detecting channel (4); the electromagnetic detector (1) being **characterised in that** the dielectric structure (601, 602) comprises at least one first component (601) having a first dielectric permittivity and at least one second component (602) having a second dielectric permittivity, the first dielectric permittivity and the second dielectric permittivity being different from each other, wherein preferably the first dielectric permittivity is less than the second dielectric permittivity.

2. The electromagnetic detector (1) according to claim 1, wherein the first component (601) comprises an outer part (603), which is configured to at least partly cover the detecting channel (4) and has two lateral panels (603a; 603b) which are opposite each other and a back panel (603c) which delimits a back of the detecting channel (4), and an inner part (604), which is contained inside the body (5); and wherein the second component (602) is entirely contained inside the body (5), and in particular is contained in the inner part (604) of the first component (601).

3. The electromagnetic detector (1) according to claim 2, wherein the inner part (604) of the first component (601) comprises two separating elements (604a; 604b) which extend transversally, in particular perpendicularly, starting from the respective lateral panel (603a; 603b) and are positioned on opposite sides of the detecting channel (4); wherein the body (5) delimits a cavity and wherein the two separating elements (604a; 604b) are configured and positioned to divide said cavity into an emission cavity (505) and into a reception cavity (506).

4. The electromagnetic detector (1) according to claim 3, wherein the second component (602) comprises at least one pair of blocks (602a; 602b) and each separating element (604a; 604b) comprises a respective seat (605a; 605b), configured to house a respective block (602a; 602b); wherein each block (602a; 602b) is separate and distinct from the other block (602b; 602a); or wherein each block (602a; 602b) is joined to the other block (602b; 602a) by means of a connecting portion configured to connect the two blocks (602b; 602a) to each other.

5. The electromagnetic detector (1) according to one of claims 2 to 4, wherein at least one of the two lateral panels (603a; 603b) has a central zone (606), which projects further into the detecting channel (4) than a remaining zone (607), which surrounds the central zone (606), in such a way that a passage section of the detecting channel (4) at the central zone (606) is smaller than the passage section of the detecting channel (4) at the remaining zone (607).

6. The electromagnetic detector (1) according to one of claims 2 to 5, and comprising at least one field concentrator (902a; 902b), associated with one of the two lateral panels (603a; 603b), which has at least one final end positioned along a path for conveying the product (2) in the detecting channel along the conveying line (D), the field concentrator (902a; 902b) being configured to concentrate the electromagnetic field at said final end.

7. The electromagnetic detector (1) according to claim 6, when it is dependent on claim 5, wherein the field concentrator (902a; 902b) is made of a conductive material and is housed in the lateral panel (603a; 603b); wherein the field concentrator (902a; 902b) has an elongate shape, for example is shaped like a strip, and is positioned transversally, in particular perpendicularly to the conveying line (D); and wherein optionally the field concentrator (902a; 902b) is housed in the central zone (606) of the lateral panel (603a; 603b); and wherein optionally wherein the field concentrator (902a; 902b) extends for an entire thickness of the lateral panel (603a; 603b) until it makes contact with the second component (602).

8. The electromagnetic detector (1) according claim 3 or according to one of claims 4 to 7, when they are dependent on claim 3, wherein the body (5) has a rear wall (501) and a front wall (502), interrupted by the detecting channel (4), which are opposite each other and are parallel to each other, and comprises two housings (503a; 503b) which extend from the rear wall (501); wherein the detecting channel (4) extends along a longitudinal axis (X), parallel to the conveying line (D); and wherein the electromagnetic detector (1) has a first transversal axis (Y), in particular perpendicular, to the longitudinal axis (X) which is also perpendicular to the rear wall (501), and a second transversal axis (Z), in particular perpendicular, both to the longitudinal axis (X) of the detecting channel (4) and to the first transversal axis (Y); and wherein the emission cavity (505) comprises a source of emission (701) for creating the electromagnetic field, and wherein the reception cavity (506) comprises a source of reception (702) for receiving an electromagnetic field altered by the presence of the product (2) in the detecting channel (4).

9. The electromagnetic detector (1) according to claim 8, wherein each separating element (604a, 604b) is contained in a respective housing (503a; 503b).

10. The electromagnetic detector (1) according to claim 8, or claim 9, wherein each separating element (604a; 604b) extends, along a line parallel to the first transversal axis (Y), from the rear wall (501) to the front wall (502) to divide the cavity into the emission cavity (505) and into the reception cavity (506).

11. The electromagnetic detector (1) according to one of claims 8 to 10, wherein the body (5) has the shape of a parallelepiped and comprises at least two lateral walls (507) which are parallel to each other, opposite each other and "C"-shaped, and two end walls (508) which are opposite each other, wherein each separating element (604a; 604b) extends, along a line parallel to the second transversal axis (Z), from the respective lateral panel (603a; 603b) to the respective end wall (508).

12. The electromagnetic detector (1) according to one of claims 8 to 11, wherein the source of emission (701) and the source of reception (702) are fixed to the rear wall (501) in a diametrically opposed position relative to a plane of symmetry perpendicular to the longitudinal axis (X) of the detecting channel (4).

13. The electromagnetic detector (1) according to one of claims 8 to 12, and comprising at least one temperature sensor (801a), which is fixed to the rear wall (501) and is positioned in the body (5) to measure the temperature of a housing (503a; 503b); or comprising two temperature sensors (801a; 801b), which are fixed to the rear wall (501), and positioned in the body (5) to measure the temperature of respective housings (503a; 503b).

14. The electromagnetic detector (1) according to claim 13, when it is dependent on claim 12, wherein the temperature sensor (801a) is positioned in a position diametrically opposed to the source of emission (701) and to the source of reception (702), or wherein the temperature sensors (801a; 801b) are positioned in a position diametrically opposed to the source of emission (701) and to the source of reception (702).

15. The electromagnetic detector (1) according to one of claims 8 to 14, and comprising a heating device (802) fixed to the rear wall (501) to heat the body (5) to a preset operating temperature T.

16. The electromagnetic detector (1) according to one of the preceding claims, wherein the electromagnetic detector (1) is a microwave resonator operating at resonance frequency greater than or equal to 100 MHz and less than or equal to 3 GHz, preferably greater than or equal to 100MHZ and less than or equal to 2GHZ, even more preferably greater than or equal to 1GHZ and less than or equal to 1.9GHZ, preferably equal to 1.8GHZ; wherein the electromagnetic field has an electric field oriented parallel to a conveying plane in which the conveying line (D) for the product (2) lies.

17. The electromagnetic detector (1) according to claim 16, and comprising at least one mode selector, which is made of a conductive material and is fixed to the body (5) to eliminate unwanted modes of resonance of the electromagnetic field; wherein the mode selector is shaped like a bar and is positioned parallel to the conveying line (D) of the detecting channel (4).

18. The electromagnetic detector (1) according to claim 17, when it is dependent on one of claims 8 to 15, wherein each housing (503a; 503b) comprises a respective mode selector (901a; 901b) which is configured to pass through the emission cavity (505), the inner part (604) of the first component (601), and the reception cavity (506), each mode selector (901a; 901b) also passing through the respective second component (602), the latter being entirely contained in the inner part (604) of the first component (601).

19. The electromagnetic detector (1) according to claim 18, when dependent on claim 4, wherein each mode selector (901a; 901b) passes through the respective separating element (604a; 604b) and the block housed in it (602a; 602b).

20. The electromagnetic detector (1) according to one of the preceding claims, wherein the first component (601) is made of a first dielectric material and the second component (602) is made of a second dielectric material, in such a way that the first dielectric permittivity is less than the second dielectric permittivity; wherein the first dielectric material is an inert material and may be a material of the plastic type, which may be selected in the group consisting of: high density polyethylene, abbreviated as HDPE;
polystyrene, abbreaviated as PS;
Polytetrafluoroethylene, a polymer belonging to the class of perfluorocarbons, abbreviated as PFC, and if necessary any combination of them; and wherein the second dielectric material may be selected in the group consisting of: ceramic material, for example aluminium oxide Al2O3, or alumina, barium titanate BaTO3;
crystalline material, for example aluminium oxide Al2O3 in the mineral form as corundum, or sapphire; and
if necessary any combination of them.

21. The electromagnetic detector (1) according to one of the preceding claims, wherein the dielectric structure comprises the first component (601), which is made of a first dielectric material, the second component (602) and a plurality of further components which are different from each other, made of respective dielectric materials, wherein the second component (602) and the plurality of further components is entirely contained in the body (5).

22. The electromagnetic detector according to claim 21, when dependent on claim 2, and wherein the second component (602) and the plurality of further components is entirely contained in the inner part (604) of the first component (601).

23. The electromagnetic detector (1) according to one of the preceding claims, wherein the dielectric structure comprises the first component (601) and a plurality of other components which are different from each other, made of respective dielectric materials which are different from each other, the first component (601) and the plurality of other components being positioned partly covering the detecting channel (4).

24. An apparatus for detecting one or more properties of a product (2) of the tobacco field, wherein the product is a capsule included in a rod-shaped article (3), wherein the system comprising an electromagnetic detector (1) according to one of claims 1 to 23 and a conveying device provided with seats configured to retain respective articles (3) to be inspected and to convey said articles (3) one after another perpendicularly to a respective longitudinal axis of them, a stretch of each article (3) containing the product (2) projecting relative to the conveying device to pass through the detecting channel (4) in such a way that the electromagnetic detector (1) can detect the features of the product (2); wherein the electromagnetic field in the detecting channel (4) has an electric field oriented parallel to the longitudinal axis of the articles (3) conveyed.

## Patentansprüche

1. Elektromagnetischer Detektor (1) zur Erfassung einer oder mehrerer Eigenschaften eines Produkts (2), zum Beispiel einer Kapsel in einem stabförmigen Artikel (3) des Tabakbereichs oder eines Halbfertigerzeugnisses des Tabakbereichs, das eingewickelt werden soll, der einen Erfassungskanal (4) umfasst, bei dem es sich um den Sitz eines elektromagnetischen Felds handelt, und der an drei Seiten offen ist, um zu ermöglichen, dass das Produkt (2) entlang einer Förderlinie (D) durch den Detektor (1) gefördert wird, wobei der elektromagnetische Detektor (1) Folgendes umfasst: einen hohlen Körper (5), der aus einem leitfähigen Material besteht und eine Unterbrechung aufweist, die ausgelegt ist, um den Erfassungskanal (4) zu definieren, und eine dielektrische Struktur (601, 602), die in dem Körper (5) untergebracht ist und aus einem nicht leitfähigen Material besteht, die ausgelegt ist, um den Erfassungskanal (4) mindestens teilweise zu bedecken, wobei der elektromagnetische Detektor (1) **dadurch gekennzeichnet ist, dass** die dielektrische Struktur (601, 602) mindestens eine erste Komponente (601), aufweisend eine erste dielektrische Permittivität, und mindestens eine zweite Komponente (602), aufweisend eine zweite dielektrische Permittivität, umfasst, wobei die erste dielektrische Permittivität und die zweite dielektrische Permittivität voneinander verschieden sind, wobei die erste dielektrische Permittivität vorzugsweise geringer als die zweite dielektrische Permittivität ist.

2. Elektromagnetischer Detektor (1) nach Anspruch 1, wobei die erste Komponente (601) ein äußeres Teil (603) umfasst, das ausgelegt ist, um den Erfassungskanal (4) mindestens teilweise zu bedecken, und zwei Seitenplatten (603a; 603b), die einander gegenüberliegen, und eine Rückplatte (603c), die eine Rückseite des Erfassungskanals (4) begrenzt, aufweist, sowie ein inneres Teil (604), das im Inneren des Körpers (5) enthalten ist, und wobei die zweite Komponente (602) vollständig im Inneren des Körpers (5) enthalten ist und insbesondere in dem inneren Teil (604) der ersten Komponente (601) enthalten ist.

3. Elektromagnetischer Detektor (1) nach Anspruch 2, wobei das innere Teil (604) der ersten Komponente (601) zwei trennende Elemente (604a; 604b) umfasst, die sich quer, insbesondere senkrecht, ausgehend von der jeweiligen Seitenplatte (603a; 603b) erstrecken und an gegenüberliegenden Seiten des Erfassungskanals (4) positioniert sind, wobei der Körper (5) einen Hohlraum begrenzt, und wobei die beiden trennenden Elemente (604a; 604b) ausgelegt und positioniert sind, um den Hohlraum in einen Aussendehohlraum (505) und in einen Empfangshohlraum (506) zu unterteilen.

4. Elektromagnetischer Detektor (1) nach Anspruch 3, wobei die zweite Komponente (602) mindestens ein Paar von Blöcken (602a; 602b) umfasst und jedes trennende Element (604a; 604b) einen jeweiligen Sitz (605a; 605b) umfasst, der ausgelegt ist, um einen jeweiligen Block (602a; 602b) unterzubringen, wobei jeder Block (602a; 602b) separat und verschieden von dem anderen Block (602b; 602a) ist, oder wobei jeder Block (602a; 602b) mit dem anderen Block (602b; 602a) mittels eines Verbindungsabschnitts zusammengefügt ist, der ausgelegt ist, um die beiden Blöcke (602b; 602a) miteinander zu verbinden.

5. Elektromagnetischer Detektor (1) nach einem der Ansprüche 2 bis 4, wobei mindestens eine der beiden Seitenplatten (603a; 603b) eine zentrale Zone (606) aufweist, die weiter in den Erfassungskanal (4) als eine verbleibende Zone (607), die die zentrale Zone (606) umgibt, derart hineinragt, dass ein Durchgangsquerschnitt des Erfassungskanals (4) an der zentralen Zone (606) kleiner als der Durchgangsquerschnitt des Erfassungskanals (4) an der verbleibenden Zone (607) ist.

6. Elektromagnetischer Detektor (1) nach einem der Ansprüche 2 bis 5, und umfassend mindestens einen Feldkonzentrator (902a; 902b), der mit einer der beiden Seitenplatten (603a; 603b) verknüpft ist, der mindestens ein finales Ende aufweist, das entlang eines Wegs zum Fördern des Produkts (2) in dem Erfassungskanal entlang der Förderlinie (D) positioniert ist, wobei der Feldkonzentrator (902a; 902b) ausgelegt ist, um das elektromagnetische Feld an dem finalen Ende zu konzentrieren.

7. Elektromagnetischer Detektor (1) nach Anspruch 6, wenn dieser von Anspruch 5 abhängt, wobei der Feldkonzentrator (902a; 902b) aus einem leitfähigen Material besteht und in der Seitenplatte (603a; 603b) untergebracht ist, wobei der Feldkonzentrator (902a; 902b) eine langgestreckte Form aufweist, zum Beispiel wie ein Streifen ausgeformt ist, und quer, insbesondere senkrecht, zu der Förderlinie (D) positioniert ist, und wobei der Feldkonzentrator (902a; 902b) optional in der zentralen Zone (606) der Seitenplatte (603a; 603b) untergebracht ist, und wobei sich der Feldkonzentrator (902a; 902b) optional über die gesamte Dicke der Seitenplatte (603a; 603b) erstreckt, bis er die zweite Komponente (602) berührt.

8. Elektromagnetischer Detektor (1) nach Anspruch 3 oder nach einem der Ansprüche 4 bis 7, wenn diese von Anspruch 3 abhängen, wobei der Körper (5) eine Rückwand (501) und eine Frontwand (502) aufweist, unterbrochen durch den Erfassungskanal (4), die einander gegenüberliegen und parallel zueinander sind, und zwei Gehäuse (503a; 503b) umfasst, die sich von der Rückwand (501) erstrecken, wobei sich der Erfassungskanal (4) entlang einer Längsachse (X) parallel zu der Förderlinie (D) erstreckt, und wobei der elektromagnetische Detektor (1) eine erste Querachse (Y) insbesondere senkrecht zu der Längsachse (X) aufweist, die ebenfalls senkrecht zu der Rückwand (501) ist, und eine zweite Querachse (Z), die insbesondere sowohl zu der Längsachse (X) des Erfassungskanals (4) als auch zu der ersten Querachse (Y) senkrecht ist, und wobei der Aussendehohlraum (505) eine Aussendequelle (701) zur Erzeugung des elektromagnetischen Felds umfasst, und wobei der Empfangshohlraum (506) eine Empfangsquelle (702) zum Empfangen eines elektromagnetischen Felds, das durch das Vorhandensein des Produkts (2) in dem Erfassungskanal (4) geändert ist, umfasst.

9. Elektromagnetischer Detektor (1) nach Anspruch 8, wobei jedes trennende Element (604a, 604b) in einem jeweiligen Gehäuse (503a; 503b) enthalten ist.

10. Elektromagnetischer Detektor (1) nach Anspruch 8 oder Anspruch 9, wobei sich jedes trennende Element (604a; 604b) entlang einer Linie parallel zu der ersten Querachse (Y) von der Rückwand (501) zu der Frontwand (502) erstreckt, um den Hohlraum in den Aussendehohlraum (505) und in den Empfangshohlraum (506) zu unterteilen.

11. Elektromagnetischer Detektor (1) nach einem der Ansprüche 8 bis 10, wobei der Körper (5) die Form eines Parallelepipeds aufweist und mindestens zwei Seitenwände (507) umfasst, die parallel zueinander sind, einander gegenüberliegen und "C"-förmig sind, sowie zwei Endwände (508), die einander gegenüberliegen, wobei sich jedes trennende Element (604a; 604b) entlang einer Linie parallel zu der zweiten Querachse (Z) von der jeweiligen Seitenplatte (603a; 603b) zu der jeweiligen Endwand (508) erstreckt.

12. Elektromagnetischer Detektor (1) nach einem der Ansprüche 8 bis 11, wobei die Aussendequelle (701) und die Empfangsquelle (702) an der Rückwand (501) in einer diametral entgegengesetzten Position relativ zu einer Symmetrieebene senkrecht zu der Längsachse (X) des Erfassungskanals (4) befestigt sind.

13. Elektromagnetischer Detektor (1) nach einem der Ansprüche 8 bis 12, und umfassend mindestens einen Temperatursensor (801a), der an der Rückwand (501) befestigt ist und in dem Körper (5) positioniert ist, um die Temperatur eines Gehäuses (503a; 503b) zu messen, oder umfassend zwei Temperatursensoren (801a; 801b), die an der Rückwand (501) befestigt und in dem Körper (5) positioniert sind, um die Temperatur jeweiliger Gehäuse (503a; 503b) zu messen.

14. Elektromagnetischer Detektor (1) nach Anspruch 13, wenn dieser von Anspruch 12 abhängt, wobei der Temperatursensor (801a) in einer Position diametral entgegengesetzt zu der Aussendequelle (701) und zu der Empfangsquelle (702) positioniert ist, oder wobei die Temperatursensoren (801a; 801b) in einer Position diametral entgegengesetzt zu der Aussendequelle (701) und zu der Empfangsquelle (702) positioniert sind.

15. Elektromagnetischer Detektor (1) nach einem der Ansprüche 8 bis 14, und umfassend eine Heizvorrichtung (802), die an der Rückwand (501) befestigt ist, um den Körper (5) auf eine voreingestellte Betriebstemperatur T zu heizen.

16. Elektromagnetischer Detektor (1) nach einem der vorhergehenden Ansprüche, wobei der elektromagnetische Detektor (1) ein Mikrowellenresonator ist, der bei einer Resonanzfrequenz größer oder gleich 100 MHz und kleiner oder gleich 3 GHz, vorzugsweise größer oder gleich 100 MHz und kleiner oder gleich 2 GHz, noch bevorzugter größer oder gleich 1 GHz und kleiner oder gleich 1,9 GHz, vorzugsweise gleich 1,8 GHz arbeitet, wobei das elektromagnetische Feld ein elektrisches Feld aufweist, das parallel zu einer Förderebene, in der die Förderlinie (D) für das Produkt (2) liegt, ausgerichtet ist.

17. Elektromagnetischer Detektor (1) nach Anspruch 16, und umfassend mindestens einen Modusschalter, der aus einem leitfähigen Material besteht und an dem Körper (5) befestigt ist, um unerwünschte Resonanzmodi des elektromagnetischen Felds zu beseitigen, wobei der Modusschalter wie eine Stange ausgeformt ist und parallel zu der Förderlinie (D) des Erfassungskanals (4) positioniert ist.

18. Elektromagnetischer Detektor (1) nach Anspruch 17, wenn dieser von einem der Ansprüche 8 bis 15 abhängt, wobei jedes Gehäuse (503a; 503b) einen jeweiligen Modusschalter (901a; 901b) umfasst, der ausgelegt ist, um durch den Aussendehohlraum (505), das innere Teil (604) der ersten Komponente (601) und den Empfangshohlraum (506) hindurchzuführen, wobei jeder Modusschalter (901a; 901b) auch durch die jeweilige zweite Komponente (602) hindurchführt, wobei Letztere vollständig in dem inneren Teil (604) der ersten Komponente (601) enthalten ist.

19. Elektromagnetischer Detektor (1) nach Anspruch 18, wenn abhängig von Anspruch 4, wobei jeder Modusschalter (901a; 901b) durch das jeweilige trennende Element (604a; 604b) und den in ihm untergebrachten Block (602a; 602b) hindurchführt.

20. Elektromagnetischer Detektor (1) nach einem der vorhergehenden Ansprüche, wobei die erste Komponente (601) aus einem ersten dielektrischen Material besteht und die zweite Komponente (602) aus einem zweiten dielektrischen Material besteht, derart, dass die erste dielektrische Permittivität geringer als die zweite dielektrische Permittivität ist, wobei das erste dielektrische Material ein Inertmaterial ist und ein Material vom Kunststofftyp sein kann, das aus der Gruppe, bestehend aus Polyethylen hoher Dichte, abgekürzt als HDPE; Polystyrol, abgekürzt als PS; Polytetrafluorethylen, einem zur Klasse der Perfluorcarbone gehörenden Polymer, abgekürzt als PFC, sowie gegebenenfalls jeder beliebigen Kombination davon, ausgewählt sein kann, und wobei das zweite dielektrische Material aus der Gruppe, bestehend aus keramischem Material, beispielsweise Aluminiumoxid Al2O3 oder Tonerde, Bariumtitanat BaTO3; kristallinem Material, beispielsweise Aluminiumoxid Al2O3 in der Mineralform Korund oder Saphir; sowie gegebenenfalls jeder beliebigen Kombination davon, ausgewählt sein kann.

21. Elektromagnetischer Detektor (1) nach einem der vorhergehenden Ansprüche, wobei die dielektrische Struktur die erste Komponente (601), die aus einem ersten dielektrischen Material besteht, die zweite Komponente (602) und eine Vielzahl von weiteren Komponenten umfasst, die voneinander verschieden sind, bestehend aus jeweiligen dielektrischen Materialien, wobei die zweite Komponente (602) und die Vielzahl von weiteren Komponenten vollständig in dem Körper (5) enthalten sind.

22. Elektromagnetischer Detektor nach Anspruch 21, wenn abhängig von Anspruch 2, und wobei die zweite Komponente (602) und die Vielzahl von weiteren Komponenten vollständig in dem inneren Teil (604) der ersten Komponente (601) enthalten sind.

23. Elektromagnetischer Detektor (1) nach einem der vorhergehenden Ansprüche, wobei die dielektrische Struktur die erste Komponente (601) und eine Vielzahl von anderen Komponenten umfasst, die voneinander verschieden sind, bestehend aus jeweiligen dielektrischen Materialien, die voneinander verschieden sind, wobei die erste Komponente (601) und die Vielzahl von anderen Komponenten so positioniert sind, dass sie den Erfassungskanal (4) teilweise bedecken.

24. Einrichtung zur Erfassung einer oder mehrerer Eigenschaften eines Produkts (2) des Tabakbereichs, wobei das Produkt eine Kapsel ist, die in einem stabförmigen Artikel (3) beinhaltet ist, wobei das System einen elektromagnetischen Detektor (1) nach einem der Ansprüche 1 bis 23 und eine Fördervorrichtung umfasst, die mit Sitzen versehen ist, die ausgelegt sind, um jeweilige zu inspizierende Artikel (3) zu halten und diese Artikel (3) nacheinander senkrecht zu einer jeweiligen Längsachse davon zu fördern, wobei ein Teilstück jedes Artikels (3), das das Produkt (2) enthält, relativ zu der Fördervorrichtung hervorragt, um durch den Erfassungskanal (4) derart hindurchgeführt zu werden, dass der elektromagnetische Detektor (1) die Merkmale des Produkts (2) erfassen kann, wobei das elektromagnetische Feld in dem Erfassungskanal (4) ein elektrisches Feld aufweist, das parallel zu der Längsachse der geförderten Artikel (3) ausgerichtet ist.

## Revendications

1. Détecteur électromagnétique (1) permettant la détection d'une ou plusieurs propriétés d'un produit (2), par exemple d'une capsule dans un article en forme de tige (3) du domaine du tabac ou d'un produit semi-fini du domaine du tabac destiné à être enveloppé, qui comprend un canal de détection (4) qui est le siège d'un champ électromagnétique et est ouvert sur trois côtés pour permettre au produit (2) d'être transporté à travers le détecteur (1) le long d'une ligne de transport (D) ; dans lequel le détecteur électromagnétique (1) comprend : un corps creux (5), qui est fabriqué dans un matériau conducteur et comporte une interruption configurée pour définir le canal de détection (4), et une structure diélectrique (601, 602), logée dans le corps (5) et fabriquée dans un matériau non conducteur, qui est configurée pour recouvrir au moins partiellement le canal de détection (4) ; le détecteur électromagnétique (1) étant **caractérisé en ce que** la structure diélectrique (601, 602) comprend au moins un premier composant (601) comportant une première permittivité diélectrique et au moins un second composant (602) comportant une seconde permittivité diélectrique, la première permittivité diélectrique et la seconde permittivité diélectrique étant différentes l'une de l'autre, dans lequel de préférence la première permittivité diélectrique est inférieure à la seconde permittivité diélectrique.

2. Détecteur électromagnétique (1) selon la revendication 1, dans lequel le premier composant (601) comprend une partie externe (603), qui est configurée pour recouvrir au moins partiellement le canal de détection (4) et comporte deux panneaux latéraux (603a ; 603b) qui sont opposés l'un à l'autre et un panneau arrière (603c) qui délimite une partie arrière du canal de détection (4), et une partie interne (604), qui est contenue à l'intérieur du corps (5) ; et dans lequel le second composant (602) est entièrement contenu à l'intérieur du corps (5), et en particulier est contenu dans la partie interne (604) du premier composant (601).

3. Détecteur électromagnétique (1) selon la revendication 2, dans lequel la partie interne (604) du premier composant (601) comprend deux éléments de séparation (604a ; 604b) qui s'étendent transversalement, en particulier perpendiculairement, à partir du panneau latéral respectif (603a ; 603b) et sont positionnés sur des côtés opposés du canal de détection (4) ; dans lequel le corps (5) délimite une cavité et dans lequel les deux éléments de séparation (604a ; 604b) sont configurés et positionnés pour diviser ladite cavité en une cavité d'émission (505) et en une cavité de réception (506).

4. Détecteur électromagnétique (1) selon la revendication 3, dans lequel le second composant (602) comprend au moins une paire de blocs (602a ; 602b) et chaque élément de séparation (604a ; 604b) comprend un siège respectif (605a ; 605b), configuré pour loger un bloc respectif (602a ; 602b) ; dans lequel chaque bloc (602a ; 602b) est séparé et distinct de l'autre bloc (602b ; 602a) ; ou dans lequel chaque bloc (602a ; 602b) est joint à l'autre bloc (602b ; 602a) au moyen d'une portion de liaison configurée pour relier les deux blocs (602b ; 602a) l'un à l'autre.

5. Détecteur électromagnétique (1) selon l'une quelconque des revendications 2 à 4, dans lequel au moins l'un des deux panneaux latéraux (603a ; 603b) comporte une zone centrale (606), qui fait saillie plus loin dans le canal de détection (4) qu'une zone restante (607), qui entoure la zone centrale (606), de telle sorte qu'une section de passage du canal de détection (4) au niveau de la zone centrale (606) est plus petite que la section de passage du canal de détection (4) au niveau de la zone restante (607).

6. Détecteur électromagnétique (1) selon l'une quelconque des revendications 2 à 5, et comprenant au moins un concentrateur de champ (902a ; 902b), associé à l'un des deux panneaux latéraux (603a ; 603b), qui comporte au moins une extrémité finale positionnée le long d'un trajet pour transporter le produit (2) dans le canal de détection le long de la ligne de transport (D), le concentrateur de champ (902a ; 902b) étant configuré pour concentrer le champ électromagnétique à ladite extrémité finale.

7. Détecteur électromagnétique (1) selon la revendication 6, lorsqu'elle dépend de la revendication 5, dans lequel le concentrateur de champ (902a ; 902b) est fabriqué dans un matériau conducteur et est logé dans le panneau latéral (603a ; 603b) ; dans lequel le concentrateur de champ (902a ; 902b) a une forme allongée, par exemple est en forme de bande, et est positionné transversalement, en particulier perpendiculairement à la ligne de transport (D) ; et dans lequel facultativement le concentrateur de champ (902a ; 902b) est logé dans la zone centrale (606) du panneau latéral (603a ; 603b) ; et dans lequel facultativement le concentrateur de champ (902a ; 902b) s'étend sur toute l'épaisseur du panneau latéral (603a ; 603b) jusqu'à ce qu'il entre en contact avec le second composant (602).

8. Détecteur électromagnétique (1) selon la revendication 3 ou selon l'une quelconque des revendications 4 à 7, lorsqu'elles dépendent de la revendication 3, dans lequel le corps (5) comporte une paroi arrière (501) et une paroi avant (502), interrompues par le canal de détection (4), qui sont opposées l'une à l'autre et sont parallèles l'une à l'autre, et comprend deux logements (503a ; 503b) qui s'étendent à partir de la paroi arrière (501) ; dans lequel le canal de détection (4) s'étend le long d'un axe longitudinal (X), parallèle à la ligne de transport (D) ; et dans lequel le détecteur électromagnétique (1) comporte un premier axe transversal (Y), en particulier perpendiculaire, à l'axe longitudinal (X) qui est également perpendiculaire à la paroi arrière (501), et un second axe transversal (Z), en particulier perpendiculaire, à la fois à l'axe longitudinal (X) du canal de détection (4) et au premier axe transversal (Y) ; et dans lequel la cavité d'émission (505) comprend une source d'émission (701) pour créer le champ électromagnétique, et dans lequel la cavité de réception (506) comprend une source de réception (702) pour recevoir un champ électromagnétique modifié par la présence du produit (2) dans le canal de détection (4).

9. Détecteur électromagnétique (1) selon la revendication 8, dans lequel chaque élément de séparation (604a, 604b) est contenu dans un logement respectif (503a ; 503b).

10. Détecteur électromagnétique (1) selon la revendication 8 ou la revendication 9, dans lequel chaque élément de séparation (604a ; 604b) s'étend, le long d'une ligne parallèle au premier axe transversal (Y), de la paroi arrière (501) à la paroi avant (502) pour diviser la cavité en la cavité d'émission (505) et en la cavité de réception (506).

11. Détecteur électromagnétique (1) selon l'une quelconque des revendications 8 à 10, dans lequel le corps (5) a la forme d'un parallélépipède et comprend au moins deux parois latérales (507) qui sont parallèles l'une à l'autre, opposées l'une à l'autre et en forme de « C », et deux parois d'extrémité (508) qui sont opposées l'une à l'autre, dans lequel chaque élément de séparation (604a ; 604b) s'étend, le long d'une ligne parallèle au second axe transversal (Z), du panneau latéral respectif (603a ; 603b) à la paroi d'extrémité respective (508).

12. Détecteur électromagnétique (1) selon l'une quelconque des revendications 8 à 11, dans lequel la source d'émission (701) et la source de réception (702) sont fixées à la paroi arrière (501) dans une position diamétralement opposée par rapport à un plan de symétrie perpendiculaire à l'axe longitudinal (X) du canal de détection (4).

13. Détecteur électromagnétique (1) selon l'une quelconque des revendications 8 à 12, et comprenant au moins un capteur de température (801a), qui est fixé à la paroi arrière (501) et est positionné dans le corps (5) pour mesurer la température d'un logement (503a ; 503b) ; ou comprenant deux capteurs de température (801a ; 801b), qui sont fixés à la paroi arrière (501), et positionnés dans le corps (5) pour mesurer la température des logements respectifs (503a ; 503b).

14. Détecteur électromagnétique (1) selon la revendication 13, lorsqu'elle dépend de la revendication 12, dans lequel le capteur de température (801a) est positionné dans une position diamétralement opposée à la source d'émission (701) et à la source de réception (702), ou dans lequel les capteurs de température (801a ; 801b) sont positionnés dans une position diamétralement opposée à la source d'émission (701) et à la source de réception (702).

15. Détecteur électromagnétique (1) selon l'une quelconque des revendications 8 à 14, et comprenant un dispositif de chauffage (802) fixé à la paroi arrière (501) pour chauffer le corps (5) à une température de fonctionnement T prédéfinie.

16. Détecteur électromagnétique (1) selon l'une quelconque des revendications précédentes, dans lequel le détecteur électromagnétique (1) est un résonateur micro-ondes fonctionnant à une fréquence de résonance supérieure ou égale à 100 MHz et inférieure ou égale à 3 GHz, de préférence supérieure ou égale à 100 MHz et inférieure ou égale à 2 GHz, encore plus préférablement supérieure ou égale à 1 GHz et inférieure ou égale à 1,9 GHz, de préférence égale à 1,8 GHz ; dans lequel le champ électromagnétique comporte un champ électrique orienté parallèlement à un plan de transport dans lequel se trouve la ligne de transport (D) pour le produit (2).

17. Détecteur électromagnétique (1) selon la revendication 16, et comprenant au moins un sélecteur de mode, qui est fabriqué dans un matériau conducteur et est fixé au corps (5) pour éliminer les modes de résonance indésirables du champ électromagnétique ; dans lequel le sélecteur de mode a la forme d'une barre et est positionné parallèlement à la ligne de transport (D) du canal de détection (4).

18. Détecteur électromagnétique (1) selon la revendication 17, lorsqu'elle dépend de l'une quelconque des revendications 8 à 15, dans lequel chaque logement (503a ; 503b) comprend un sélecteur de mode respectif (901a ; 901b) qui est configuré pour passer à travers la cavité d'émission (505), la partie interne (604) du premier composant (601) et la cavité de réception (506), chaque sélecteur de mode (901a ; 901b) passant également à travers le second composant respectif (602), ce dernier étant entièrement contenu dans la partie interne (604) du premier composant (601).

19. Détecteur électromagnétique (1) selon la revendication 18, lorsqu'elle dépend de la revendication 4, dans lequel chaque sélecteur de mode (901a ; 901b) passe à travers l'élément de séparation respectif (604a ; 604b) et le bloc logé dans celui-ci (602a ; 602b).

20. Détecteur électromagnétique (1) selon l'une quelconque des revendications précédentes, dans lequel le premier composant (601) est fabriqué dans un premier matériau diélectrique et le second composant (602) est fabriqué dans un second matériau diélectrique, de telle sorte que la première permittivité diélectrique est inférieure à la seconde permittivité diélectrique ; dans lequel le premier matériau diélectrique est un matériau inerte et peut être un matériau de type plastique, qui peut être choisi dans le groupe constitué par : le polyéthylène haute densité, en abrégé HDPE ; le polystyrène, en abrégé PS ; le polytétrafluoroéthylène, un polymère appartenant à la classe des perfluorocarbones, en abrégé PFC, et si nécessaire toute combinaison de ceux-ci ; et dans lequel le second matériau diélectrique peut être choisi dans le groupe constitué par : un matériau céramique, par exemple l'oxyde d'aluminium Al2O3, ou l'alumine, le titanate de baryum BaTO3 ; un matériau cristallin, par exemple l'oxyde d'aluminium Al2O3 sous forme minérale comme le corindon, ou le saphir ; et si nécessaire toute combinaison de ceux-ci.

21. Détecteur électromagnétique (1) selon l'une quelconque des revendications précédentes, dans lequel la structure diélectrique comprend le premier composant (601), qui est fabriqué dans un premier matériau diélectrique, le second composant (602) et une pluralité de composants supplémentaires qui sont différents les uns des autres, fabriqués dans des matériaux diélectriques respectifs, dans lequel le second composant (602) et la pluralité de composants supplémentaires sont entièrement contenus dans le corps (5).

22. Détecteur électromagnétique selon la revendication 21, lorsqu'elle dépend de la revendication 2, et dans lequel le second composant (602) et la pluralité de composants supplémentaires sont entièrement contenus dans la partie interne (604) du premier composant (601).

23. Détecteur électromagnétique (1) selon l'une quelconque des revendications précédentes, dans lequel la structure diélectrique comprend le premier composant (601) et une pluralité d'autres composants qui sont différents les uns des autres, fabriqués dans des matériaux diélectriques respectifs qui sont différents les uns des autres, le premier composant (601) et la pluralité d'autres composants étant positionnés en recouvrant partiellement le canal de détection (4).

24. Appareil permettant la détection d'une ou plusieurs propriétés d'un produit (2) du domaine du tabac, dans lequel le produit est une capsule incluse dans un article en forme de tige (3), dans lequel le système comprend un détecteur électromagnétique (1) selon l'une quelconque des revendications 1 à 23 et un dispositif de transport muni de sièges configurés pour retenir les articles respectifs (3) à inspecter et pour transporter lesdits articles (3) les uns après les autres perpendiculairement à un axe longitudinal respectif de ceux-ci, un tronçon de chaque article (3) contenant le produit (2) faisant saillie par rapport au dispositif de transport pour passer à travers le canal de détection (4) de telle sorte que le détecteur électromagnétique (1) puisse détecter les caractéristiques du produit (2) ; dans lequel le champ électromagnétique dans le canal de détection (4) comporte un champ électrique orienté parallèlement à l'axe longitudinal des articles (3) transportés.
